# EUROPÄISCHE PATENTSCHRIFT

(11) **EP 0 936 539 B1**
(45) Veröffentlichungstag und Bekanntmachung des Hinweises auf die Patenterteilung: **31.10.2012**
(21) Anmeldenummer: 99101556.1
(22) Anmeldetag: 28.01.1999
(51) Int. Cl.: G06F 9/38, G06F 9/32

(54) **Vorrichtung und Verfahren zum Holen von Befehlen für eine programmgesteuerte Einheit**
Apparatus and method for fetching instructions for a program controlled unit
Dispositif et procédé d'extraction d' instructions pour une unité commandée par programme

(30) Priorität: 12.02.1998 DE 19805784
(43) Veröffentlichungstag der Anmeldung: 18.08.1999
(73) Patentinhaber: Infineon Technologies AG, 85579 Neubiberg (DE)
(72) Erfinder: Birkhäuser,Jürgen, 81735 München (DE)
(74) Vertreter: Jannig, Peter

(56) Entgegenhaltungen:
- WO-A-96/39657
- JP-A- 61 217 834
- US-A- 4 521 850
- US-A- 4 755 935
- US-A- 5 197 131

## Beschreibung

Die vorliegende Erfindung betrifft eine Vorrichtung gemäß dem Oberbegriff des Patentanspruchs 1 und ein Verfahren gemäß dem Oberbegriff des Patentanspruchs 9.

Die programmgesteuerte Einheit, welche durch diese Vorrichtung bzw. dieses Verfahren mit Befehlsdaten zu versorgen ist, ist beispielsweise ein Mikroprozessor, Mikrocontroller oder dergleichen.

Die Instruction Queue ist Bestandteil der Befehlsholvorrichtung der programmgesteuerten Einheit. Sie ist dazu ausgelegt, eine Vielzahl von Befehlen repräsentierende Befehlsdaten zwischenzuspeichern und bei Bedarf, d.h. wenn die Abarbeitung des betreffenden Befehls ansteht, an die Befehlsausführungs vorrichtung der programmgesteuerten Einheit auszugeben.

Die in die Instruction Queue eingeschriebenen Befehlsdaten werden aus einem innerhalb oder außerhalb der programmgesteuerten Einheit vorgesehenen Programmspeicher ausgelesen. Das Holen der Befehlsdaten aus dem Programmspeicher und das Einschreiben derselben in die Instruction Queue erfolgt dabei ohne Unterbrechung und in der Regel unabhängig vom Rhythmus, in dem die programmgesteuerte Einheit, genauer gesagt deren Befehlsausführungsvorrichtung die Befehle ausführt; der Vorgang wird nur unterbrochen, wenn dadurch in der Instruction Queue noch abzuarbeitende Befehle überschrieben werden würden.

Die Bereitstellung von Befehlen repräsentierenden Befehlsdaten in der Instruction Queue erweist sich als vorteilhaft, weil die Instruction Queue einen sehr schnellen Zugriff auf die Befehlsdaten gestattet und die Befehlsausführungsvorrichtung der programmgesteuerten Einheit mithin selten oder nie länger auf die den nächsten Befehl repräsentierenden Befehlsdaten warten muß.

Dies gilt allerdings nur, wenn und so lange die Befehle in der Reihenfolge abgearbeitet werden, in der sie im Programmspeicher (und damit auch in der Instruction Queue) gespeichert sind, was seinerseits nur der Fall ist, wenn und solange bei der Programmausführung keine Sprungbefehle, Taskwechsel, Interrupts etc. auftreten. Bei der in solchen Fällen auftretenden nicht-adresssequentiellen Programmausführung können die in der Instruction Queue schon bereitgestellten Befehlsdaten nicht mehr verwendet werden, denn diese stammen ja allenfalls zufällig von der Adresse, von welcher der nach einem Sprung oder dergleichen auszuführende Befehl zu holen ist. Auf solche Ereignisse wird meistens mit einem sogenannten Queue Flush reagiert, durch welchen bewirkt wird, daß die in der Instruction Queue bereitgestellten Daten verworfen werden und das Auslesen von Befehlsdaten aus dem Programmspeicher (und Einschreiben derselben in die Instruction Queue) von der Zieladresse des Sprunges an fortgesetzt wird.

In solchen Situationen entsteht bei der Programmausführung eine Pause, denn die den nach einem Sprung oder dergleichen auszuführenden Befehl repräsentierenden Befehlsdaten müssen ja erst aus dem normalerweise vergleichsweise langsamen Programmspeicher geholt werden.

Derartige Pausen sind verständlicherweise unerwünscht.

Eine Vorrichtung gemäß dem Oberbegriff des Patentanspruchs 1 und ein Verfahren gemäß dem Oberbegriff des Patentanspruchs 9 sind aus der US 4,521,850 A bekannt. Weiterer Stand der Technik ist in der WO 96/39657 A1 und der US 5,197,131 beschrieben. Den genannten Dokumenten ist jedoch keine zufriedenstellende Lösung des vorstehend angesprochenen Problems entnehmbar.

Der vorliegenden Erfindung liegt daher die Aufgabe zugrunde, die Vorrichtung gemäß dem Oberbegriff des Patentanspruchs 1 und das Verfahren gemäß dem Oberbegriff des Patentanspruchs 9 derart weiterzubilden, daß das Auftreten von Pausen bei der Programmausführung auf ein Minimum reduziert wird.

Diese Aufgabe wird erfindungsgemäß durch die in Patentanspruch 1 beanspruchte Vorrichtung bzw. das in Patentanspruch 9 beanspruchte Verfahren gelöst.

Dadurch kann das Auftreten von Pausen bei der Programmausführung auf ein Minimum reduziert werden.

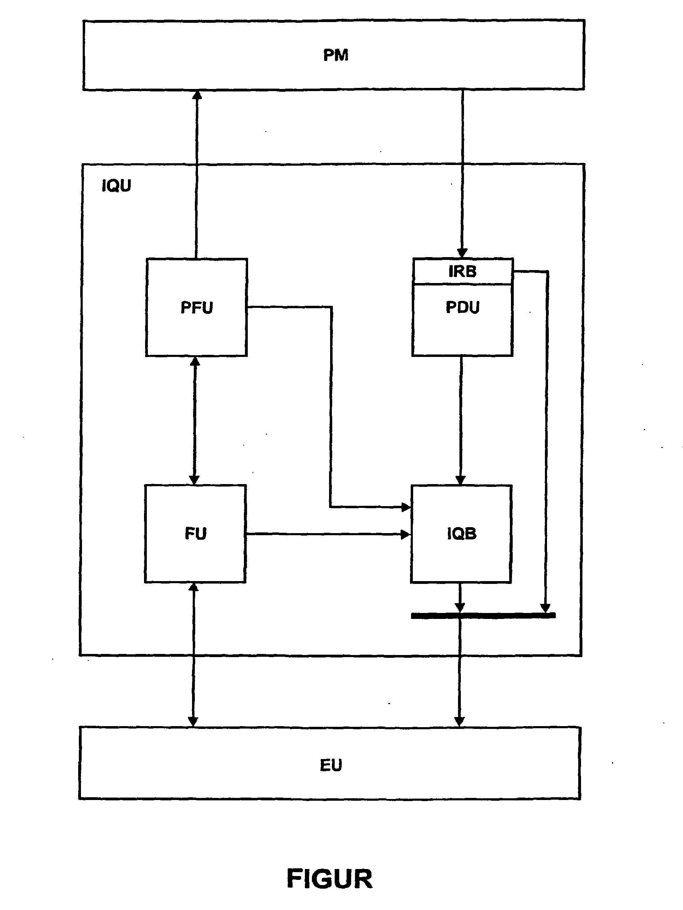

Vorteilhafte Weiterbildungen der Erfindung sind den Unteransprüchen, der folgenden Beschreibung und der Zeichnung entnehmbar.

Die Erfindung wird nachfolgend anhand eines Ausführungsbeispiels unter Bezugnahme auf die Zeichnung näher erläutert. Die Figur zeigt schematisch den Aufbau einer Instruction-Queue-Einheit einer Befehlsholvorrichtung eines Mikrocontrollers.

Die im folgenden beschriebene Vorrichtung und das im folgenden beschriebene Verfahren sind Bestandteile einer programmgesteuerten Einheit.

Die programmgesteuerte Einheit ist im betrachteten Beispiel ein 32-Bit-Mikrocontroller. Es sei jedoch bereits an dieser Stelle darauf hingewiesen, daß die Vorrichtung und das Verfahren auch bei beliebigen anderen Mikrocontrollern und beliebigen anderen programmgesteuerten Einheiten wie beispielsweise Mikroprozessoren, Signalprozessoren etc. einsetzbar sind.

Der betrachtete Mikrocontroller hat (wie jede andere programmgesteuerte Einheit auch) eine Befehlsholvorrichtung, durch welche aus einem Programmspeicher Befehle repräsentierende Befehlsdaten geholt und zur Ausführung durch eine Befehlsausführungsvorrichtung der programmgesteuerten Einheit bereitgestellt werden.

Die einen Befehl repräsentierenden Befehlsdaten sind im betrachteten Beispiel 2 oder 4 Byte lang; sie können aber auch beliebig viel länger oder kürzer sein.

Die Befehlsholvorrichtung enthält eine Instruction-Queue-Einheit mit einer Instruction Queue, in welcher eine größere Anzahl von Befehlen repräsentierenden Befehlsdaten zwischenspeicherbar ist.

Der Aufbau dieser Instruction-Queue-Einheit ist schematisch in der Figur gezeigt.

Die (in der Figur mit dem Bezugszeichen IQU bezeichnete) Instruction-Queue-Einheit enthält einen die eigentliche Instruction Queue repräsentierenden Instruction-Queue-Puffer (instruction queue buffer) IQB, eine Vorab-Befehlshol-Einheit (prefetch unit) PFU, eine Befehlshol-Einheit (fetch unit) FU, und eine Vordekodier- und Vorhersage-Einheit (predecode unit) PDU; die Instruction-Queue-Einheit IQU ist mit einem Programmspeicher PM und der Befehlsausführungsvorrichtung EU, genauer gesagt der Dekodierstufe der Befehlsausführungs-Pipeline des Mikrocontollers verbunden.

Der besagte Programmspeicher PM kann dabei innerhalb und/oder außerhalb des Mikrocontrollers vorgesehen und durch beliebige Speichereinrichtungen wie beispielsweise ein ROM, ein RAM, ein Flash, ein Band, eine Diskette, eine Festplatte, eine CD etc. gebildet werden.

Die Instruction-Queue-Einheit IQU ist dazu ausgelegt, fortlaufend Befehle repräsentierende Befehlsdaten aus dem Programmspeicher PM zu holen, zwischenzuspeichern, und bei Bedarf, d.h. wenn die Ausführung eines jeweiligen Befehls durch die Befehlsausführungsvorrichtung EU ansteht, an diese auszugeben.

Das Holen der Befehlsdaten aus dem Programmspeicher PM wird durch die Vorab-Befehlshol-Einheit PFU veranlaßt. Dieser obliegt es, Befehle repräsentierende Befehlsdaten möglichst im voraus, d.h. noch bevor sie zur Ausführung benötigt werden, aus dem Programmspeicher PM in die Instruction-Queue-Einheit IQU einzulesen und dort, genauer gesagt im Instruction-Queue-Puffer IQB zwischenzuspeichern. Das Lesen erfolgt im Normalfall von aufeinanderfolgenden Adressen des Programmspeichers PM; es wird so schnell wie möglich durchgeführt und nur unterbrochen, wenn in den Instruction-Queue-Puffer IQB keine weiteren Daten mehr eingeschrieben werden können.

Der Instruction-Queue-Puffer IQB ist im betrachteten Beispiel in vier gleich große Bereiche untergliedert und weist eine Gesamtkapazität von 64 Byte auf. Das Beschreiben des Instruction-Queue-Puffers erfolgt bei adresssequentieller Programmabarbeitung nach dem sogenannten Round-Robin-Verfahren. Dabei werden wiederholt nacheinander die Pufferbereiche 1 bis 4, d.h. beispielsweise erst der Pufferbereich 1, dann der Pufferbereich 2, dann der Pufferbereich 3, dann der Pufferbereich 4, dann wieder der Pufferbereich 1 usw. gefüllt. Auf die einzelnen Pufferbereiche kann aber sowohl beim Einschreiben von Daten in den Instruction-Queue-Puffer IQB als auch beim Auslesen derselben aus diesem ganz gezielt selektiv zugegriffen werden. Innerhalb des die Instruction Queue repräsentierenden Instruction-Queue-Puffers sind also mehrere bestimmte Stellen selektiv anspringbar. Wie später noch genauer beschrieben werden wird, wird im betrachteten Beispiel bei zu erwartenden bzw. durchgeführten Adresssprüngen im Programmablauf von dieser Möglichkeit Gebrauch gemacht. Es sei jedoch bereits an dieser Stelle darauf hingewiesen, daß bei Bedarf auch bei beliebigen anderen Gelegenheiten von dieser Möglichkeit Gebrauch gemacht werden kann, und daß die sehr vorteilhafte selektive Anspringbarkeit mehrerer bestimmter Stellen innerhalb des Instruction-Queue-Puffers auch realisierbar ist, ohne diesen wie vorliegend in mehrere Bereiche zu untergliedern.

Die aus dem Programmspeicher PM ausgelesenen Daten werden jedoch nicht unmittelbar in den Instruction-Queue-Puffer IQB, sondern zunächst in die diesem vorgeschaltete Vordekodier- und Vorhersage-Einheit PDU, genauer gesagt in ein dafür vorgesehenes Befehlsdaten-Register IRB desselben geschrieben. Dann (im nächsten Taktzyklus) werden die Befehlsdaten durch die Vordekodier- und Vorhersage-Einheit PDU analysiert und in den Instruction-Queue-Puffer IQB eingetragen oder an diesem vorbei gleich in die Befehlsausführungsvorrichtung EU (die Dekodier-Stufe der Befehlsausführungs-Pipeline) des Mikrocontrollers eingeschleust.

Bei der in der Vordekodier- und Vorhersage-Einheit PDU stattfindenden Analyse werden die betroffenen Befehlsdaten dekodiert und daraufhin überprüft, ob sie bei deren späterer Ausführung in der Befehlsausführungsvorrichtung EU eine nichtadresssequentielle Programmausführung bewirken werden oder bewirken können, was beispielsweise bei unbedingten und bedingten Sprungbefehlen, Unterprogrammaufrufen, Interrupts, Rücksprungbefehlen und dergleichen der Fall ist.

Wenn die Vordekodier- und Vorhersage-Einheit PDU dabei einen Befehl erkennt, der einen nicht-adresssequentiellen Programmablauf zur Folge hat oder haben kann, ermittelt sie, wo die Programmausführung im Fall eines nicht-adresssequentiellen Programmablaufs fortzusetzen ist und veranlaßt, daß noch vor der Ausführung des betreffenden Befehls damit begonnen wird, die Befehle aus dem Programmspeicher PM auszulesen, die auszuführen sind, wenn der den nicht-adresssequentiellen Programmablauf bewirken könnende Befehl bei der Ausführung einen nicht-adresssequentiellen Programmablauf bewirkt. Die dabei gelesenen Befehlsdaten werden jedoch in einen neuen Bereich des Instruction-Queue-Puffers IQB geschrieben.

Mit dem Lesen von Befehlen, die im Fall eines nicht-adresssequentiellen Programmablaufs nach dem den nicht-adresssequentiellen Programmablauf bewirkenden Befehl auszuführen sind, wird erst begonnen, wenn im Instruction-Queue-Puffer IQB eine gewisse Mindestanzahl von Befehlen gespeichert ist, die auszuführen sind, wenn der den nicht-adresssequentiellen Programmablauf bewirken könnende Befehl keinen nicht-adresssequentiellen Programmablauf bewirkt. Dazu sind gegebenenfalls zunächst noch ein oder mehrere weitere adresssequentielle Befehlsholvorgänge aus dem Programmspeicher PM durchzuführen. Dadurch kann erreicht werden, daß auch bei einer Fehlprognose der Vordekodier- und Vorhersage-Einheit PDU oder für den Fall, daß es sich bei dem erkannten Sprungbefehl oder dergleichen um einen nicht ausgeführten bedingten Sprung oder dergleichen handelt, ein oder mehrere Befehle, die auszuführen wären, wenn der den nicht-adresssequentiellen Programmablauf bewirken könnende Befehl keinen nicht-adresssequentiellen Programmablauf bewirken würde, zur sofortigen Abholung bereitstehen.

Wenn die Vordekodier- und Vorhersage-Einheit PDU einen bedingten Sprungbefehl oder dergleichen erkannt hat, wird vorzugsweise kontrolliert, ob und gegebenenfalls wie sich die davor auszuführenden oder ausgeführten Befehle auf die Sprungbedingung auswirken. Dadurch können falsche Vorhersagen seitens der Vordekodier- und Vorhersage-Einheit PDU frühzeitig erkannt und korrigiert werden.

Folgt auf einen ersten Sprungbefehl sofort oder später ein zweiter Sprungbefehl, so wiederholen sich die beschriebenen Vorgänge, wobei jedoch die vom zweiten Sprungziel an gelesenen Daten in einen wieder anderen Bereich des Instruction-Queue-Puffers IQB geschrieben werden.

Die von der Vorab-Befehlshol-Einheit PFU wie beschrieben aus dem Programmspeicher PM in die Instruction-Queue-Einheit IQU geholten Befehlsdaten werden bei Bedarf, d.h. wenn die Ausführung der betreffenden Befehle ansteht, durch die Befehlshol-Einheit FU von der Instruction-Queue-Einheit IQU an die Befehlsausführungsvorrichtung EU des Mikrocontrollers, genauer gesagt an die Dekodierstufe der Befehlsausführungs-Pipeline desselben gegeben. Die Befehlshol-Einheit FU holt die benötigten Befehlsdaten entweder aus dem Instruction-Queue-Puffer IQB oder aus dem Befehlsdaten-Register IRB der Vordekodier- und Vorhersage-Einheit PDU. Sie überprüft dabei zunächst, ob die gewünschten Befehlsdaten schon an einer der genannten Stellen in der Instruction-Queue-Einheit IQU bereitstehen. Ist dies der Fall, veranlaßt sie deren Ausgabe an die Befehlsausführungsvorrichtung. Stehen die benötigten Befehlsdaten noch nicht in der Instruction-Queue-Einheit IQU bereit, so veranlaßt die Befehlshol-Einheit FU, daß die entsprechenden Daten aus dem Programmspeicher PM geholt werden. Bis der Befehl eintrifft, ist die Programmausführung unterbrochen; die Befehlshol-Einheit FU erzeugt während dieser Zeit Wartezyklen. Durch die neuartige Instruction Queue und die Art und Weise, diese zu betreiben, kommen derartige Fälle jedoch entweder überhaupt nicht oder allenfalls äußerst selten vor.

In gewissen Fällen erweist es sich als vorteilhaft, wenn durch die Befehlshol-Einheit FU zusammen mit dem benötigten Befehl gleich auch noch der diesem folgende Befehl aus der Instruction-Queue-Einheit geholt wird. Dann können nämlich auch die sogenannten 0-Zyklus-Sprünge wie beispielsweise bei den sogenannten MAC (multiply and accumulate)-Schleifen in digitalen Filtern äußerst effizient ausgeführt werden.

Es versteht sich von selbst, daß sowohl die Anzahl der Bereiche, in welche der Instruction-Queue-Puffer IQB untergliedert ist, als auch deren Größe gegenüber dem betrachteten Beispiel beliebig verändert und dadurch an die gegebenen Verhältnisse angepaßt werden. Dabei kann es sich auch als vorteilhaft erweisen, wenn vorgesehen wird, daß der Benutzer der programmgesteuerten Einheit den Instruction-Queue-Puffer selbst nach seinen Vorstellungen konfigurieren kann.

Der Einsatz des beschriebenen Instruction-Queue-Puffers IQB läßt sich noch effizienter gestalten als es ohnehin schon der Fall ist, wenn zur Erzeugung der Befehlsdaten ein spezieller Compiler verwendet wird, der dazu ausgelegt ist, nicht zu viele Sprungbefehle aufeinanderfolgen zu lassen und/oder Sprungbedingungen zu Zeitpunkten und auf eine Art und Weise zu verändern, daß sie von der Vordekodier- und Vorhersage-Einheit PDU einfach und sicher erkennbar sind und/oder Schleifen und häufig ausgeführte Unterprogramme möglichst kurz zu gestalten usw.

Eine weitere Effizienzsteigerung läßt sich erzielen, wenn die Instruction Queue bzw. der diese repräsentierende Instruction-Queue-Puffer IQB nicht nur als eine Befehlswarteschlange, sondern auch als Befehls-Cache verwendet wird. Dieser Befehls-Cache besitzt durch die 4 Pufferbereiche des Instruction-Queue-Puffers IQB 4 voll assoziative Cache-Bänke; da jedem Pufferbereich wahlfrei eine beliebige Adresse zugeordnet werden kann, können in den 4 Pufferbereichen bis zu 4 16 Bytes umfassende Befehlssequenzen von verschiedenen Adressen gespeichert sein. Dies macht sich insbesondere bei (wiederholt ausgeführten) kurzen Unterprogrammen, bei kurzen Schleifen (beispielsweise den MAC-Schleifen bei Programmen zur digitalen Filterung) und bei Sprungfolgen (beispielsweise hervorgerufen durch switch/case-Abfragen in C-Programmen) geschwindigkeitssteigernd bemerkbar.

Durch die vier Pufferbereiche des Instruction-Queue-Puffers IQB ist es möglich, bei mindestens zwei aufeinanderfolgenden Sprungbefehlen die an den Folgeadressen der Sprungbefehle gespeicherten Befehlsdaten und die ab den jeweiligen Sprungzielen gespeicherten Befehlsdaten in der Instruction Queue bereitzustellen.

Die Befehlsausführungsvorrichtung EU des Mikrocontrollers kann also auch nach Sprungbefehlen sofort, d.h. ohne Wartezeit mit den den jeweils nächsten auszuführenden Befehl bzw. den die jeweils nächsten auszuführenden Befehle repräsentierenden Befehlsdaten versorgt werden.

Die beschriebene Vorrichtung und das beschriebene Verfahren ermöglichen es damit, das Auftreten von Pausen bei der Programmausführung auf ein Minimum zu reduzieren.

## Patentansprüche

1. Vorrichtung zum Holen von Befehle repräsentierenden Befehlsdaten für eine programmgesteuerte Einheit, mit einer Instruction Queue zum Bereitstellen der vorab aus einem Programmspeicher (PM) geholten Befehlsdaten,
- wobei die Instruction Queue dazu ausgelegt ist, beim Einschreiben von Befehlsdaten in die Instruction Queue und/oder beim Auslesen von Befehlsdaten aus der Instruction Queue mehrere bestimmte Stellen innerhalb der Instruction Queue selektiv anspringen zu lassen, und
- wobei die Instruction Queue durch einen Instruction-Queue-Puffer (IQB) gebildet wird,
**dadurch gekennzeichnet,**
- **dass** eine Vordekodier- und Vorhersage-Einheit (PDU) vorgesehen ist, welche die aus dem Programmspeicher (PM) ausgelesenen Befehlsdaten daraufhin überprüft, ob sie Befehle repräsentieren, deren Ausführung einen nicht-adresssequentiellen Programmablauf zur Folge haben wird oder haben kann,
- **dass** die Vorrichtung dazu ausgelegt ist, nach dem Erfassen eines Befehls, dessen Ausführung einen nicht-adresssequentiellen Programmablauf zur Folge haben wird oder haben kann, noch vor der Ausführung des betreffenden Befehls damit zu beginnen, Befehlsdaten aus dem Programmspeicher (PM) auszulesen und in den Instruction-Queue-Puffer (IQB) zu schreiben, welche Befehle repräsentieren, die auszuführen sind, wenn der den nicht-adresssequentiellen Programmablauf bewirken könnende Befehl bei der Ausführung einen nicht-adresssequentiellen Programmablauf bewirkt, und
- **dass** die Vorrichtung dazu ausgelegt ist, mit dem Lesen von Befehlsdaten, welche Befehle repräsentieren, die im Fall eines nicht-adresssequentiellen Programmablaufs nach dem den nicht-adresssequentiellen Programmablauf bewirkenden Befehl auszuführen sind, erst zu beginnen, wenn im Instruction-Queue-Puffer (IQB) Befehlsdaten gespeichert sind, welche eine gewisse Mindestanzahl von Befehlen repräsentieren, die auszuführen sind, wenn der den nicht-adresssequentiellen Programmablauf bewirken könnende Befehl keinen nicht-adresssequentiellen Programmablauf bewirkt, wobei die Mindestanzahl 1 oder größer ist.

2. Vorrichtung nach Anspruch 1,
**dadurch gekennzeichnet,**
**dass** der Instruction-Queue-Puffer (IQB) in mehrere Bereiche unterteilt ist.

3. Vorrichtung nach Anspruch 2,
**Dadurch gekennzeichnet,**
**dass** jeder der Bereiche des Instruction-Queue-Puffer (IQB) dazu ausgelegt ist, mehrere Befehle repräsentierende Befehlsdaten zu speichern.

4. Vorrichtung nach Anspruch 2 oder 3,
**dadurch gekennzeichnet,**
**dass** der Instruction-Queue-Puffer (IQB) dazu ausgelegt ist, ganz oder teilweise als Befehls-Cache verwendet zu werden.

5. Vorrichtung nach einem der vorhergehenden Ansprüche, **dadurch gekennzeichnet,**
**dass** die Vordekodier- und Vorhersage-Einheit (PDU) dazu ausgelegt ist, bei Erfassen eines Befehls, dessen Ausführung einen nicht-adresssequentiellen Programmablauf zur Folge haben wird oder haben kann, die Adresse vorherzusagen, ab welcher die Programmausführung im Fall eines nicht-adresssequentiellen Programmablaufs fortzusetzen ist.

6. Vorrichtung nach einem der vorhergehenden Ansprüche, **dadurch gekennzeichnet,**
**dass** die Vorrichtung dazu ausgelegt ist, die aus dem Programmspeicher (PM) ausgelesenen Befehle, die im Fall eines nicht-adresssequentiellen Programmablaufs nach dem den nicht-adresssequentiellen Programmablauf bewirkenden Befehl auszuführen sind, in einen neuen Bereich des Instruction-Queue-Puffers zu schreiben.

7. Vorrichtung nach einem der vorhergehenden Ansprüche, **dadurch gekennzeichnet,**
**dass** die Vordekodier- und Vorhersage-Einheit (PDU) dazu ausgelegt ist, bei Erfassen eines Befehls, dessen Ausführung nur bei Erfüllung einer bestimmten Bedingung einen nicht-adresssequentiellen Programmablauf zur Folge hat, zu kontrollieren, ob und gegebenenfalls wie sich die noch vor dem betreffenden Befehl auszuführenden oder ausgeführten Befehle auf die Erfüllung der bestimmten Bedingung auswirken.

8. Vorrichtung nach einem der vorhergehenden Ansprüche, **dadurch gekennzeichnet,**
**dass** die Vorrichtung dazu ausgelegt ist, beim Ausgeben von Befehlsdaten aus der Instruction Queue die den als nächsten auszuführenden Befehl repräsentierenden Befehlsdaten und die den Folgebefehl repräsentierenden Befehlsdaten auszugeben.

9. Verfahren zum Holen von Befehle repräsentierenden Befehlsdaten für eine programmgesteuerte Einheit mit einer Instruction Queue zum Bereitstellen der vorab aus einem Programmspeicher (PM) geholten Befehlsdaten,
- wobei beim Einschreiben von Befehlsdaten in die Instruction Queue und/oder beim Auslesen von Befehlsdaten aus der Instruction Queue im Ansprechen auf bestimmte Ereignisse selektiv eine von mehreren bestimmten Stellen innerhalb der Instruction Queue angesprungen wird, und
- wobei die Instruction Queue durch einen Instruction-Queue-Puffer (IQB) gebildet wird,
**dadurch gekennzeichnet,**
- **dass** die aus dem Programmspeicher (PM) ausgelesenen Befehlsdaten in einer Vordekodier- und Vorhersage-Einheit (PDU) daraufhin überprüft werden, ob sie Befehle repräsentieren, deren Ausführung einen nicht-adresssequentiellen Programmablauf zur Folge haben wird oder haben kann,
- **dass** nach dem Erfassen eines Befehls, dessen Ausführung einen nicht-adresssequentiellen Programmablauf zur Folge haben wird oder haben kann, noch vor der Ausführung des betreffenden Befehls damit begonnen wird, Befehlsdaten aus dem Programmspeicher (PM) auszulesen und in den Instruction-Queue-Puffer (IQB) zu schreiben, welche Befehle repräsentieren, die auszuführen sind, wenn der den nicht-adresssequentiellen Programmablauf bewirken könnende Befehl bei der Ausführung einen nicht-adresssequentiellen Programmablauf bewirkt, und
- **dass** mit dem Lesen von Befehlsdaten, welche Befehle repräsentieren, die im Fall eines nicht-adresssequentiellen Programmablaufs nach dem den nicht-adresssequentiellen Programmablauf bewirkenden Befehl auszuführen sind, erst begonnen wird, wenn im Instruction-Queue-Puffer (IQB) Befehlsdaten gespeichert sind, welche eine gewisse Mindestanzahl von Befehlen repräsentieren, die auszuführen sind, wenn der den nicht-adresssequentiellen Programmablauf bewirken könnende Befehl keinen nicht-adresssequentiellen Programmablauf bewirkt, wobei die Mindestanzahl 1 oder größer ist.

## Claims

1. Apparatus for fetching instruction data representing instructions for a program-controlled unit, having an instruction queue for providing the instruction data previously fetched from a program memory (PM),
- the instruction queue being designed to make it possible to selectively jump to a plurality of particular positions within the instruction queue when writing instruction data to the instruction queue and/or when reading instruction data from the instruction queue, and
- the instruction queue being formed by an instruction queue buffer (IQB),
**characterized**
- **in that** a predecoding and prediction unit (PDU) is provided which checks the instruction data which have been read from the program memory (PM) in order to determine whether said data represent instructions whose execution will or may result in a non-address-sequential program sequence,
- **in that**, after the detection of an instruction whose execution will or may result in a non-address-sequential program sequence, the apparatus is designed, even before the execution of the relevant instruction, to start reading instruction data from the program memory (PM) and writing said data to the instruction queue buffer (IQB), which data represent instructions which are to be executed if the instruction which may cause the non-address-sequential program sequence causes a non-address-sequential program sequence during execution, and
- **in that** the apparatus is designed to start reading instruction data representing instructions, which, in the event of a non-address-sequential program sequence, are to be executed after the instruction which causes the non-address-sequential program sequence, only if instruction data representing a certain minimum number of instructions, which are to be executed if the instruction which may cause the non-address-sequential program sequence does not cause a non-address-sequential program sequence, are stored in the instruction queue buffer (IQB), the minimum number being 1 or more.

2. Apparatus according to Claim 1,
**characterized**
**in that** the instruction queue buffer (IQB) is subdivided into a plurality of areas.

3. Apparatus according to Claim 2,
**characterized**
**in that** each of the areas of the instruction queue buffer (IQB) is designed to store instruction data representing a plurality of instructions.

4. Apparatus according to Claim 2 or 3,
**characterized**
**in that** the instruction queue buffer (IQB) is designed to be entirely or partially used as an instruction cache.

5. Apparatus according to one of the preceding claims, **characterized**
**in that**, upon detecting an instruction whose execution will or may result in a non-address-sequential program sequence, the predecoding and prediction unit (PDU) is designed to predict the address from which program execution should be continued in the event of a non-address-sequential program sequence.

6. Apparatus according to one of the preceding claims, **characterized**
**in that** the apparatus is designed to write the instructions, which have been read from the program memory (PM) and, in the event of a non-address-sequential program sequence, are to be executed after the instruction causing the non-address-sequential program sequence, to a new area of the instruction queue buffer.

7. Apparatus according to one of the preceding claims, **characterized**
**in that**, upon detecting an instruction whose execution results in a non-address-sequential program sequence only when a particular condition is complied with, the predecoding and prediction unit (PDU) is designed to monitor whether and, if appropriate, how the instructions which are to be executed or have been executed even before the relevant instruction affect the compliance with the particular condition.

8. Apparatus according to one of the preceding claims, **characterized**
**in that**, when outputting instruction data from the instruction queue, the apparatus is designed to output the instruction data representing the instruction to be executed next and the instruction data representing the subsequent instruction.

9. Method for fetching instruction data representing instructions for a program-controlled unit with an instruction queue for providing the instruction data previously fetched from a program memory (PM),
- a jump being selectively made to one of a plurality of particular positions within the instruction queue when writing instruction data to the instruction queue and/or when reading instruction data from the instruction queue in response to particular events, and
- the instruction queue being formed by an instruction queue buffer (IQB),
**characterized**
- **in that** the instruction data which have been read from the program memory (PM) are checked in a predecoding and prediction unit (PDU) in order to determine whether they represent instructions whose execution will or may result in a non-address-sequential program sequence,
- **in that**, after the detection of an instruction whose execution will or may result in a non-address-sequential program sequence, a start is made, even before the execution of the relevant instruction, to read instruction data from the program memory (PM) and to write said data to the instruction queue buffer (IQB), which data represent instructions which are to be executed if the instruction which may cause the non-address-sequential program sequence causes a non-address-sequential program sequence during execution, and
- **in that** a start is made to read instruction data representing instructions, which, in the event of a non-address-sequential program sequence, are to be executed after the instruction which causes the non-address-sequential program sequence, only if instruction data representing a certain minimum number of instructions, which are to be executed if the instruction which may cause the non-address-sequential program sequence does not cause a non-address-sequential program sequence, are stored in the instruction queue buffer (IQB), the minimum number being 1 or more.

## Revendications

1. Dispositif pour récupérer des données d'instruction représentant des instructions pour une unité programmable, comprenant une file d'attente d'instructions pour mettre à disposition les données d'instruction préalablement récupérées depuis une mémoire de programme (PM),
- la file d'attente d'instructions étant conçue, lors de l'écriture de données d'instruction dans la file d'attente d'instructions et/ou lors de la lecture de données d'instruction depuis la file d'attente d'instructions, pour lancer de manière sélective plusieurs positions données au sein de la file d'attente d'instructions, et
- la file d'attente d'instructions étant formée par une mémoire tampon de file d'attente d'instructions (IQB), **caractérisé en ce**
- **qu'**il est prévu une unité de prédécodage et de prévision (PDU) qui contrôle les données d'instruction lues depuis la mémoire de programme (PM) pour vérifier si elles représentent des instructions dont l'exécution aura ou peut avoir pour conséquence un déroulement du programme sans observation de l'ordre séquentiel des adresses,
- **que** le dispositif est conçu, après la détection d'une instruction dont l'exécution aura ou peut avoir pour conséquence un déroulement du programme sans observation de l'ordre séquentiel des adresses, pour commencer, encore avant l'exécution de l'instruction concernée, la lecture depuis la mémoire de programme (PM) et l'écriture dans la mémoire tampon de file d'attente d'instructions (IQB) des données d'instruction qui représentent des instructions à exécuter lorsque l'instruction qui pourrait provoquer le déroulement du programme sans observation de l'ordre séquentiel des adresses provoque, lors de son exécution, un déroulement du programme sans observation de l'ordre séquentiel des adresses, et
- **que** le dispositif est conçu pour ne commencer la lecture des données d'instruction qui représentent des instructions qui, dans le cas d'un déroulement du programme sans observation de l'ordre séquentiel des adresses, ne sont à exécuter qu'après l'instruction qui provoque le déroulement du programme sans observation de l'ordre séquentiel des adresses, si dans la mémoire tampon de file d'attente d'instructions (IQB) sont enregistrées des données d'instruction qui représentent un nombre minimum donné d'instructions qui sont à exécuter lorsque l'instruction qui peut provoquer le déroulement du programme sans observation de l'ordre séquentiel des adresses ne provoque pas de déroulement du programme sans observation de l'ordre séquentiel des adresses, le nombre minimum étant égal ou supérieur à 1.

2. Dispositif selon la revendication 1, **caractérisé en ce que** la mémoire tampon de file d'attente d'instructions (IQB) est divisée en plusieurs zones.

3. Dispositif selon la revendication 2, **caractérisé en ce que** chacune des zones de la mémoire tampon de file d'attente d'instructions (IQB) est conçue pour enregistrer des données d'instruction représentant plusieurs instructions.

4. Dispositif selon la revendication 2 ou 3, **caractérisé en ce que** la mémoire tampon de file d'attente d'instructions (IQB) est conçue pour être utilisée entièrement ou partiellement en tant que cache d'instruction.

5. Dispositif selon l'une des revendications précédentes, **caractérisé en ce que** l'unité de prédécodage et de prévision (PDU) est conçue pour, en cas de détection d'une instruction dont l'exécution aura ou peut avoir pour conséquence un déroulement du programme sans observation de l'ordre séquentiel des adresses, prévoir l'adresse à partir de laquelle doit se poursuivre le déroulement du programme dans le cas d'un déroulement du programme sans observation de l'ordre séquentiel des adresses.

6. Dispositif selon l'une des revendications précédentes, **caractérisé en ce que** le dispositif est conçu pour écrire dans une nouvelle zone de la mémoire tampon de file d'attente d'instructions les instructions lues depuis la mémoire de programme (PM) qui, dans le cas d'un déroulement du programme sans observation de l'ordre séquentiel des adresses, doivent être exécutées après l'instruction qui provoque le déroulement du programme sans observation de l'ordre séquentiel des adresses.

7. Dispositif selon l'une des revendications précédentes, **caractérisé en ce que** l'unité de prédécodage et de prévision (PDU) est conçue pour, en cas de détection d'une instruction dont l'exécution a pour conséquence un déroulement du programme sans observation de l'ordre séquentiel des adresses uniquement si une condition donnée est satisfaite, contrôler si et éventuellement comment les instructions qui sont encore à exécuter ou sont encore exécutées avant l'instruction concernée agissent sur la satisfaction de la condition donnée.

8. Dispositif selon l'une des revendications précédentes, **caractérisé en ce que** le dispositif est conçu, lors de la délivrance de données d'instruction depuis la file d'attente d'instructions, pour délivrer les données d'instruction qui représentent la prochaine instruction à exécuter et les données d'instruction qui représentent l'instruction suivante.

9. Procédé pour récupérer des données d'instruction représentant des instructions pour une unité programmable, comprenant une file d'attente d'instructions pour mettre à disposition les données d'instruction préalablement récupérées depuis une mémoire de programme (PM),
- selon lequel, lors de l'écriture de données d'instruction dans la file d'attente d'instructions et/ou lors de la lecture de données d'instruction depuis la file d'attente d'instructions en réaction à certains événements, une parmi plusieurs positions données au sein de la file d'attente d'instructions est lancée de manière sélective, et
- selon lequel la file d'attente d'instructions est formée par une mémoire tampon de file d'attente d'instructions (IQB),
**caractérisé en ce**
- **que** les données d'instruction lues depuis la mémoire de programme (PM) sont contrôlées dans une unité de prédécodage et de prévision (PDU) pour vérifier si elles représentent des instructions dont l'exécution aura ou peut avoir pour conséquence un déroulement du programme sans observation de l'ordre séquentiel des adresses,
- **qu'**après la détection d'une instruction dont l'exécution aura ou peut avoir pour conséquence un déroulement du programme sans observation de l'ordre séquentiel des adresses, la lecture depuis la mémoire de programme (PM) et l'écriture dans la mémoire tampon de file d'attente d'instructions (IQB) des données d'instruction qui représentent des instructions à exécuter lorsque l'instruction qui pourrait provoquer le déroulement du programme sans observation de l'ordre séquentiel des adresses provoque, lors de son exécution, un déroulement du programme sans observation de l'ordre séquentiel des adresses commencent encore avant l'exécution de l'instruction concernée, et
- **que** la lecture des données d'instruction qui représentent des instructions qui, dans le cas d'un déroulement du programme sans observation de l'ordre séquentiel des adresses, ne sont à exécuter qu'après l'instruction qui provoque le déroulement du programme sans observation de l'ordre séquentiel des adresses, ne commence que si dans la mémoire tampon de file d'attente d'instructions (IQB) sont enregistrées des données d'instruction qui représentent un nombre minimum donné d'instructions qui sont à exécuter lorsque l'instruction qui peut provoquer le déroulement du programme sans observation de l'ordre séquentiel des adresses ne provoque pas de déroulement du programme sans observation de l'ordre séquentiel des adresses, le nombre minimum étant égal ou supérieur à 1.
